# EUROPÄISCHE PATENTSCHRIFT

(11) **EP 0 491 756 B1**
(45) Veröffentlichungstag und Bekanntmachung des Hinweises auf die Patenterteilung: **11.05.1994**
(21) Anmeldenummer: 90913333.2
(22) Anmeldetag: 06.09.1990
(51) Int. Cl.: A62C 2/06

(54) **ROHRSCHOTT**
PIPE GROMMET
TRAVERSEE POUR TUYAUX

(30) Priorität: 14.09.1989 DE 3930722
(43) Veröffentlichungstag der Anmeldung: 01.07.1992
(60) Teilanmeldung: 93110552.2
(73) Patentinhaber: Chemische Fabrik Grünau GmbH, D-89251 Illertissen (DE)
(72) Erfinder: GRAF, Robert, W-7919 Altenstadt (DE); KAISER, Maria-Elisabeth, W-7900 Ulm (DE); ANNEMAIER, Dieter, W-7901 Illerkirchberg (DE); KEIPL, Stefan, W-7919 Bellenberg (DE)
(74) Vertreter: Wilk, Hans-Christof, Dr.
(86) Internationale Anmeldenummer: EP9001497
(87) Internationale Veröffentlichungsnummer: WO9104074

(56) Entgegenhaltungen:
- EP-A- 0 149 559
- DE-A- 2 162 251
- FR-A- 2 363 673
- GB-A- 2 111 624

## Beschreibung

Die Erfindung betrifft ein Rohrschott zum Schutz von Rohrdurchführungen durch Wände oder Decken im Brandfall mit einem zum Umfassen eines im Bereich der Wand oder Decke liegenden Rohrabschnittes ausgebildeten Mantel, zwischen dem und dem Rohr ein wärmewirksames Quellmittel zum Ausfüllen des Rohrabschnittes vorgesehen ist, und einem formfesten Gehäuse aus nicht brennbarem Material, das zum Umgeben des Rohrabschnittes ausgebildet ist, wobei zwischen Gehäusemantel und Rohr ein Ringraum zur Aufnahme des Quellmittels vorgesehen ist. Dadurch, daß das Rohrschott ein festes Gehäuse aufweist, kann es vorgefertigt werden und insbesondere den gängigen Rohrgrößen schon bei der Fertigung angepaßt werden. Es sind dann bei der Montage an der Wand oder Decke keine Anpassungsmaßnahmen vorzunehmen, wodurch die Montage erleichtert und die Funktionssicherheit nicht beeinträchtigt wird.

Bei dem Rohr handelt es sich in der Regel um ein Rohr aus Kunststoff, insbesondere PVC, PE und PP. Solche Rohre haben in der Regel einen kreisrunden Querschnitt. Die Rohraußendurchmesser können nach verschiedenen Größen abgestuft sein und liegen in der Regel bei Durchmessergrößen von 32, 50, 70, 110, 132, 160, 200, 250, 315 und 400 mm. Das Rohrschott gemäß der Erfindung kann für derartige Rohre vorgesehen sein. Die Rohre können jedoch auch eine von der kreisrunden Form abweichende Querschnittsform besitzen, beispielsweise rechteckig sein. Die Rohre können zur Leitung von Fluiden bestimmt sein, wie Lüftungsrohre und Abwasserrohre. In der Regel sind in den Rohren keine Leitungen verlegt.

Der Innendurchmesser des Gehäusemantels ist größer als der Außendurchmesser des Rohres und zwar in einem solchen Maße, daß eine ausreichende Menge an Quellmittel im Zwischenraum Platz hat, um im Brandfalle ein sicheres Ausfüllen des gesamten Gehäuseinnenquerschnittes zu erzielen.

Ein Rohrschott der eingangs genannten Art, mit den im Oberbegriff des Anspruchs 1 angegebenen Merkmalen ist aus der GB-A-2 111 624 bekannt. Es besteht aus einer zweiteiligen feuerfesten zylinderförmigen Hülse, die um das Rohr im Bereich seiner Durchführung durch eine Wand oder Decke gelegt werden kann. Zwischen der Hülse und dem Rohr ist ein blattförmiges Quellmittel angeordnet. Das Quellmittel hat im Brandfall die Tendenz, sich plastisch auszudehnen. Dabei ist es jedoch möglich, daß das Quellmittel aus der Hülse austritt und innerhalb des Rohrschotts nicht mehr eine ausreichende Menge an Quellmittel vorhanden ist, um die Durchführung durch Wand oder Decke vollständig zu verschließen.

Eine feuerfeste Anordnung zum Verbinden zweier Rohre im Bereich einer Durchführung durch eine Wand wird in FR-A-2 363 673 beschrieben. Diese Art von Rohrschott ist als Aufputzdose ausgebildet. Im Brandfall dehnt sich ein darin angebrachtes Quellmittel aus und drückt zwei drehbare Klappen in eine Stellung, in der diese einen Austritt des Quellmittels aus dem Rohrschott verhindern. Nachteilig ist der hohe Arbeitsaufwand bei der Montage.

Eine weitere bekannte Einrichtung zum Schutz von Rohrdurchführungen durch Wände oder Decken im Brandfall weist ein um das Kunststoffrohr zu legendes flexibles, feuerfestes Gewebe auf, auf die eine Spiralfeder drückt (EP-A-0 149 559). Die Spiralfeder ist vorgesehen, um im Brandfall das erweichende Kunststoffrohr radial zusammenzudrücken. Nach einer gewissen Zeit bildet das verbrannte Rohrmaterial dann eine schaumartige kohlenstoffhaltige Masse, die die Öffnung des teilweise zusammengedrückten Gewebes verschließt. Zu Beginn des Brandes soll das sich erweichende Kunststoffrohr verstopft werden, schon bevor ein um das Rohr angebrachtes Quellmittel seine Wirkung entfalten kann. Das Austreten des sich ausdehnenden, außen um das Rohr angebrachten Quellmittels aus dem Gehäuse wird allerdings nicht verhindert. Damit entstehen insbesondere Probleme bei einem als Aufputzdose vorgesehenen Rohrschott, denn die Menge des sich ausdehnenden Quellmittels reicht in diesem Fall möglicherweise nicht aus, um die Öffnung vollständig zu verschließen.

Der Erfindung liegt die Aufgabe zugrunde, eine Rohrabschottung zu schaffen, die funktionssicher ist, leicht montiert werden kann und wobei sichergestellt ist, daß bei einem Erweichen oder Verbrennen des Rohres innerhalb des Rohrschotts eine ausreichende Menge an Quellmittel vorhanden ist, die den Gehäusequerschnitt verschließt.

Die Aufgabe wird erfindungsgemäß bei einem Rohrschott der eingangs genannten Art dadurch gelöst, daß das Gehäuse an mindestens einem Ende mindestens einen mehrteiligen schließbaren Vorhang aufweist.

Ein solcher Vorhang kann an den beidseitigen Enden des Gehäuses vorgesehen sein. In der Regel reicht jedoch ein Vorhang an dem von der Wand oder Dekke abweisenden Ende aus. Bevorzugt ist ein Vorhang, der unabhängig von der Quellung des Quellmittels arbeitet und durch die der Durchgang durch das Gehäuse vollständig verschließbar ist, bevor das Quellmittel und mindestens solange bis dieses seine Funktion erfüllt hat. Bei einer bevorzugten Ausführungsform weist das Gehäuse einen zweiteiligen Vorhang auf. Vorteilhaft ist ferner, wenn der Vorhang in einer zur Gehäuseachse im wesentlichen senkrechten Ebene bewegbar angeordnet ist.

Das Rohrschott der Erfindung ist vorzugsweise für die Aufputzmontage ausgebildet. So kann das Gehäuse als an der Wand oder Decke befestigbare Aufputzdose ausgebildet sein. Auf diese Weise sind besondere Vorkehrungen innerhalb der Wand, zum Beispiel innerhalb eines Mauerwerks, nicht erforderlich, wodurch die Montage wiederum vereinfacht wird. Bei der Wandmontage reicht meist eine einseitige Montage aus. Bei der Deckenmontage ist es günstig, das Rohrschott an der Unterseite der Decke vorzusehen, da das Feuer in der Regel von unten kommt und das Rohrschott auf diese Weise schneller anspricht.

In einer weiteren für die Montage vorteilhaften Ausführungsform weist das Gehäuse am wand- bzw. deckenseitigen Ende des Gehäusemantels einen radial abstehenden Ringflansch auf, der an der Wand oder Decke anlegbar und insbesondere durch Befestigungsmittel anpreßbar ist. So kann das Gehäuse durch die Flansche hindurch an die Wand angeschraubt werden. Bevorzugt ist jedoch ein Festklemmen mit Hilfe von die Flansche übergreifenden Klemmlaschen, die beispielsweise über die Flansche gedreht festgeschraubt werden können.

Bei einer besonders bevorzugten Ausführungsform der Erfindung ist das Rohrschott zur nachträglichen Montage um ein bereits verlegtes Rohr ausgebildet. Hierzu ist das Gehäuse in Längsrichtung geteilt, insbesondere zweiteilig ausgebildet. Auf diese Weise können die einzelnen Teile am Außenumfang des Rohres angelegt und miteinander verbunden werden. Die hierzu vorgesehene Verbindungseinrichtung ist eine solche, die gegenüber einem Aufweiten des Mantels im Falle des Aufblähens des Quellmittels stabil ist. Die einzelnen Teile weisen Längsflansche auf, entlang derer sie aneinanderlegbar und miteinander verbindbar sind.

Das Gehäuse besteht vorzugsweise aus Metall, insbesondere aus Edelstahl bzw. korrosionsgeschütztem Stahl. Dieser besitzt eine gute Festigkeit, verbunden mit ausreichender Hitzestabilität.

Das erfindungsgemäße Rohrschott hat vorzugsweise eine relativ kurz axiale Länge. Dabei liegt das Verhältnis von axialer Länge des Gehäuses zum Außendurchmesser des Gehäusemantels im Bereich von 1:1 bis 0,5:1 und ist insbesondere kleiner 1. In bezug auf den Rohraußendurchmesser liegt die axiale Länge des Gehäuses in einer weiteren günstigen Ausführungsform der Erfindung im Bereich dieses Durchmessers. Die Justierung des Rohrschotts auf dem Rohr kann im Bereich des von der Wand oder Decke abweisenden Endes des Rohrschotts erfolgen. Ist das Rohrschott für die Wandmontage bestimmt, dann kann eine anteilig größere Quellmittelmenge oberhalb des Rohres vorgesehen sein als unterhalb. Es kann eine asymmetrische Ausrichtung des Rohrschotts bevorzugt sein, bei der der Zwischenraum zwischen Gehäusemantel und Rohr an der Oberseite größer ist als an der Unterseite. Für die Wandmontage ist deshalb die Ausrichtöffnung vorzugsweise asymmetrisch nach unten versetzt. Durch diese asymmetrische Ausbildung steht für das Quellmittel im Zwischenraum zwischen Gehäuse und Rohr oberhalb des Rohres mehr Platz zur Verfügung. Dadurch, daß die Hitze im Rohr an der Rohroberseite stärker zur Auswirkung kommt als an der Rohrunterseite, kann somit erreicht werden, daß das Quellmittel intensiver anspricht. An dem von der Wand oder Decke abweisenden Ende des Gehäuses, insbesondere in einer stirnseitigen Wand, weist das Rohrschott eine Öffnung auf, die im wesentlichen der Querschnittsform und Größe des Rohres entspricht. Der Rand dieser Öffnung kann sich somit auf dem Rohr abstützen und das Gehäuse ist durch diese Öffnung in seiner Lage auf dem Rohr ausrichtbar. Die Ausrichtung erfolgt bei einem universell anwendbaren Rohrschott, das beispielsweise zur Decken- und zur Wandmontage geeignet ist, in der Regel symmetrisch. Die Öffnung in der Stirnseite ist dann koaxial zur Gehäuseachse vorgesehen. Die Öffnung bei einem Gehäuse für die Wandmontage ist dagegen vorzugsweise asymmetrisch in der Stirnseite des Gehäuses vorgesehen, wobei die Öffnung nach unten versetzt ist.

Die Teile des Vorhangs sind mit Vorteil unter Vorspannung an dem Außenumfang des Rohres zur Anlage bringbar und berühren sich in Schließstellung vorzugsweise entlang einer Linie. Sie können sich in Schließstellung auch gegenseitig überlappen. Durch die Vorspannung wird ein Zusammendrücken und Abscheren des erweichten Rohres erzielt, wodurch das Rohrschott im wesentlichen verschlossen ist, bevor der eigentliche Schließvorgang durch das Aufquellen des Quellmittels erfolgt. Zur Erzeugung der Vorspannung können Federn, insbesondere Wendel-Zugfedern vorgesehen sein, die in Schließstellung im wesentlichen parallel nebeneinander verlaufen und zwar insbesondere längs der Verbindungsebene von zwei Gehäuseteilen. Die Vorhangteile können am Innenumfang des Gehäusemantels bzw. der jeweiligen Gehäuseteile oder im Bereich des die Öffnung aufweisenden Stirnseitenendes des Gehäuses fixiert sein. Hierzu können Bügel, insbesondere Drahtbügel am Innenumfang des Gehäusemantels vorgesehen sein, die den Vorhang an die entsprechenden Wandungsteile abdichtend drücken. Der Vorhang besteht vorzugsweise aus nichtbrennbarem Glas oder Keramikfassergewebe oder brennbarem Gewebe, welches eine Beschichtung aus einem wärmedämmenden Material aufweist. Die Zugfedern und Bügel, die normalerweise aus Stahl bestehen, sind mit Vorteil von Teilen des Vorhanges umfaßt, wodurch sie vor direkter Hitzeeinwirkung geschützt sind. Hierzu können die Teile eingesäumt sein. Mit Vorteil bestehen die Vorhangteile aus flächig zusammengelegten Schlauchstükken, in die die Zugfedern und/oder Bügel eingelegt sind. Die Vorhangteile können sich im noch nicht montierten Zustand des Rohrschotts in Schließstellung befinden. Um eine durch die starke Vorspannung mögliche Behinderung bei der Montage und insbesondere Justierung des Rohrschotts auf dem Rohr zu vermeiden, sind die die Vorspannung der Vorhangteile erzeugenden Federn, vorzugsweise an der Innenseite der Stirnwand, entlang eines Bogens lösbar fixiert, der im wesentlichen konzentrisch zur stirnseitigen Öffnung verläuft und dessen Durchmesser größer ist als der Außendurchmesser des Rohres. Die lösbare Fixierung der Federn kann mit Vorteil mit Hilfe von durch die Stirnwand hindurchgesteckten, herausziehbaren Stiften erfolgen, die nach der Montage wieder herausgezogen werden.

Es sind verschiedene Quellmittel bekannt, insbesondere in Folien-, Pasten- und Pulverform. Bei der Erfindung bevorzugt ist ein Quellmittel, das in trockener Form mindestens eines geformten Körpers vorliegt, der der Außenform des Rohres, insbesondere der Form des Zwischenraumes zwischen Rohr und Gehäuse angepaßt ist und als vorgeformter Körper einsetzbar ist. So kann das Quellmittel die Form eines im wesentlichen zylindrischen, formstabilen Rohr- oder Rinnenkörpers aufweisen, dessen Innenkrümmung gleich oder geringfügig größer ist wie die Außenkrümmung des Rohres. Weiterhin kann der Rohrkörper mit Vorteil in mindestens zwei rinnenförmig verlaufende Abschnitte unterteilt sein, die zu einem Rohrmantel zusammenfügbar sind. Bei einer zweiteiligen Ausführung des Gehäuses besitzt der Quellmittelkörper vorzugsweise die Form von zwei Halbrohren. Das Quellmittel kann durch Pressen und insbeondere durch Extrudieren zu den entsprechenden Formkörpern verdichtet sein, deren Dichte über 1 g/cm³ liegt. Dadurch können große Quellmittelmengen auf verhältnismäßig kleinem Raum untergebracht werden. Die radiale Ausdehnung des Raumes zwischen Rohr und Gehäuse und damit die Stärke der Quellmittelschicht liegt, je nach Rohraußendurchmesser und Asymmetrie des Raumes, normalerweise zwischen 10 und 40 mm.

Bei einer anderen Ausführungsform der Erfindung liegt das Quellmittel in Form eines rieselfähigen körnigen Granulats vor, dessen durchschnittliche Korngröße vorzugsweise im Bereich von 0,1 bis 5 mm liegt. Jedes Korn hat auch dann, wenn das Quellmittel eine Quellmittelmischung ist, vorzugsweise dieselbe stoffliche Zusammensetzung.

Zur leichteren Handhabung ist das Granulat vorzugsweise in mindestens einem unter Wärmeeinwirkung zerfallenden Beutel, insbesondere einem Kunststoffbeutel enthalten. Diese Beutel können in mehrere Kammern unterteilt sein, und/oder es können mehrere Beutelkammern in radialer Richtung aufeinanderfolgend vorgesehen sein. Die Kammern eines Beutels sind vorzugsweise durch gemeinsame Trennwände voneinander getrennt. Dadurch ist ein sukzessives Öffnen der Beutelkammern bei Wärmeeinwirkung möglich. Vorzugsweise enthalten die Körner des Granulats einen wärmewirksamen Kleber, der die Rieselfähigkeit bei Wärmeeinwirkung beseitigt und insbesondere bei Temperaturen über 100 °C wirksam wird. Ein solcher Kleber oder eine solche Klebermischung läßt ein Einfließen des Granulats in das Rohrinnere zu, verhindert aber ein Weiterrieseln in den Bereichen, wo die Temperatur einen Verbleib und ein Aufblähen des Quellmittels erfordert. Die Beutel können um das abzuschottende Rohr herumgelegt werden und zwar in dem zwischen Gehäuse und Rohr vorgesehenen Raum, ggf. in mehreren Schichten.

So können in dem Ringraum mindestens zwei mit Quellmittel gefüllte Beutel in Form von im wesentlichen kreisförmigen Bogen innerhalb des Gehäuses um das Rohr herumlegbar sein. Weiterhin können mit Vorteil im Gehäuse Federmittel vorgesehen sein, die mindestens an einer Rohroberseite vorgesehenes Quellmittel, insbesondere Quellmittelbeutel, gegen die Rohroberfläche drücken, um ein Eindringen von Quellmittel in ein erweichtes Rohr zu erleichtern. Ferner können Einrichtungen vorgesehen sein, die eine Schräglage oder Querlage von Quellmittel bzw. Quellmittel-Formkörpern im Gehäuseinneren begünstigen, um einen schnellen Verschluß des gesamten Rohrquerschnittes zu erzielen, was insbesondere durch Ausüben eines Kippmomentes auf das Quellmittel bzw. die Quellmittel-Formkörper erzielbar ist. Daher wird vorgeschlagen, daß das Quellmittel enthaltende Formeinheiten in Längsrichtung des Gehäuses an der dem Rohr zugewandten Seite asymmetrisch abgestützt sind, wobei insbesondere Federmittel und Abstützung in Längsrichtung derart gegeneinander versetzt sind, daß ein Kippmoment auf die Formeinheit ausgeübt wird. Bevorzugt ist dabei, daß die Abstützung im Bereich des von der Wand bzw. Decke abweisenden Endes des Gehäuses vorgesehen ist.

Des weiteren ist es günstig, wenn die Schichtdicke des Quellmittels oberhalb des Rohres größer ist als unterhalb. Ferner sollte die Wandstärke des zylindrischen Formkörpers und/oder die Dicke des mindestens einen Beutels einer durch eine Exzentrizität des Rohrdurchgangs durch das Gehäuse bedingten Asymmetrie des Ringraumes angepaßt sein.

Das Quellmittel kann in den Beuteln in einer zur Anlage an das Rohr geeigneten Formgebung vakuumverpackt und dadurch in Form stabilisiert sein. Dadurch kann auch das in Granulatform vorliegende Quellmittel die Form von vorgefertigten, der Gestalt des Zwischenraumes zwischen Gehäuse und Rohr angepaßten Formkörpern haben.

Schließlich wird als vorteilhafte Ausführungsform der Erfindung bei einem Rohrschott insbesondere zur Wandmontage genannt, daß die radiale Dicke der Quellmittelschicht oben mindestens doppelt so groß ist wie unten, insbesondere bis zu sechsfach so dick, wobei sie im wesentlichen stetig von unten nach oben zunimmt.

Das Gehäuse kann schließlich auch noch an der Innen- und/oder Außenoberfläche mit einer Dämmbeschichtung versehen sein, um die Metallteile vor zu großer Hitze zu schützen.

Weitere Einzelheiten und Vorteile der Erfindung ergeben sich aus der nachfolgenden Beschreibung von bevorzugten Ausführungsformen der Erfindung in Verbindung mit der Zeichnung. In der Zeichnung zeigen:
- Fig. 1: eine stirnseitige Ansicht einer Ausführungsform der Erfindung;
- Fig. 2: eine Ansicht entlang der Linie II-II nach Fig. 1;
- Fig. 3: eine stirnseitige Draufsicht auf eine andere Ausführungsform der Erfindung;
- Fig. 4: eine Ansicht entlang der Linie IV-IV nach Fig. 3 und
- Fig. 5: eine schematische stirnseitige Ansicht einer weiteren Ausführungsform der Erfindung.

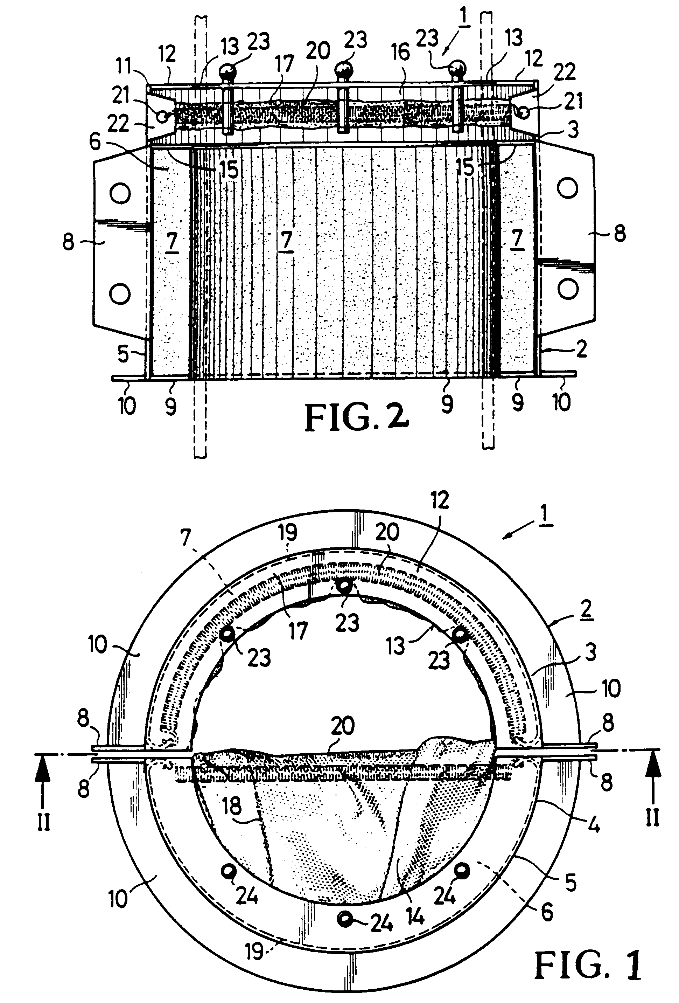

Bei der in den Fig. 1 und 2 dargestellten Ausführungsform der Erfindung ist ein Rohrschott 1 zur nachträglichen Aufputzmontage um ein bereits verlegtes, in der Zeichnung nicht dargestelltes, Kunststoffrohr im Bereich eines Durchbruches durch eine Mauer, insbesondere eine Wand oder Decke, vorgesehen. Das Rohrschott 1 besitzt ein Gehäuse 2, das aus zwei gleichen Teilen 3 und 4 zusammengesetzt ist, wobei das obere Teil mit 3 und das untere Teil mit 4 bezeichnet ist. Das Gehäuse weist eine kreisrunde Mantelfläche 5 in Form eines Rohrabschnittes auf, die durch die Unterteilung des Gehäuses in zwei halbrunde Rinnen unterteilt ist. Der Innendurchmesser des Rohrabschnittes der Mantelfläche 5 ist je nach Durchmesser des zu schützenden Rohrdurchganges etwa 5 bis 25 % größer als der Außendurchmesser des Rohres, wobei der Prozentsatz bei zunehmendem Rohrdurchmesser abnimmt. Dadurch entsteht zwischen der Mantelfläche und dem zu umgebenden Rohr ein Ringraum 6, der zur Aufnahme von Quellmittel dient, das zwischen dem Gehäuse 1 und dem Rohr gelagert wird und im Brandfalle den Rohrdurchgang durch Quellung verschließt. Bei der dargestellten Ausführungsform liegt das Quellmittel in Form von zwei halbrohrförmigen Formkörpern 7 vor, die in das jeweilige Teil des Gehäuses passen, indem der Außendurchmesser der beiden Quellmittel-Formkörper in zusammengesetztem Zustand geringfügig kleiner ist als der Innendurchmesser des Gehäusemantels 5 und der Innendurchmesser der Quellmittel-Formkörper geringfügig größer ist als der Außendurchmesser des zu umgebenden Rohres. Die Quellmittel-Formkörper 7 liegen in Form von formstabilen Preßkörpern vor. Die beiden Gehäuseteile 3 und 4 weisen an ihren Längsseiten in der Verbindungsebene liegende radiale Längsflansche 8 auf, die im montierten Zustand aneinanderliegen. Mit Hilfe dieser Längsflansche sind die beiden Gehäuseteile 3 und 4 miteinander zu einem hohlzylindrischen Gehäuse verbindbar.

An seiner der Wand oder der Decke zugewandten Stirnseite 9 weist das Gehäuse 2 einen unterteilten Ringflansch 10 auf, mit dem das Rohrschott 1 an die Wand oder Decke zur Anlage bringbar ist. Mit Hilfe von nicht dargestellten Klemmeinrichtungen oder Schrauben kann das Gehäuse an der Wand befestigt werden. Zur Justierung des Gehäuses auf dem Rohr und zur Abdichtung des Gehäuseinnenraumes gegenüber dem Rohr weist das von der Wand oder der Decke abweisende Ende 11 des Gehäuses 2 eine stirnseitige Ringplatte 12 auf, die mit ihrem Außenrand bündig am Mantel 5 des Gehäuses 2 sitzt und deren Innenrand 13 eine stirnseitige Öffnung 14 begrenzt, die zur Aufnahme des Rohres und zur Justierung dient und deren Durchmesser im wesentlichen dem Außendurchmesser des Rohres entspricht.

Die axiale Länge der Quellmittel-Formkörper ist kürzer als die des Gehäuses 2, wie dies aus Fig. 2 ersichtlich ist. Sie enden bündig mit der Stirnseite 9 des Gehäuses 2 an der Wand oder Decke. Im Bereich des von der Wand abweichenden Endes 11 sind sie gegen axiale Verschiebung durch einen von der Mantelfläche 5 nach innen ragenden Ringflansch 15 gesichert. Dieser Ringflansch 15 bringt eine zusätzliche Abdichtung gegen das Rohr und verhindert gleichzeitig ein unerwünschtes axiales Herausquellen des Quellmittels im Falle der Erhitzung. Zwischen dem Ringflansch 15 und der stirnseitigen Ringplatte 12 befindet sich am von der Wand bzw. Decke abweisenden Ende des Gehäuses 2 ein zusätzlicher Ringraum 16, in dessen zur Gehäuseachse senkrechten Ebene ein zweiteiliger Vorhang 17 vorgesehen ist, der in Schließrichtung federbelastet ist. Jeder Teil 18 des Vorhanges wird aus einem Gewebeschlauchstück aus Glasgewebe gebildet, das mit einer feuerhemmenden Dämmschicht versehen ist. Jedes Schlauchstück 18 ist flach zusammengelegt, wobei ein Längsrand mit Hilfe eines Drahtbügels 19 gegen die Innenwand der Mantelfläche 5 innerhalb des zusätzlichen Ringraumes 16 gedrückt wird, wogegen der andere Rand mit Hilfe einer durch das Schlauchstück 18 hindurchgeführten Zugfeder 20 in Form einer Wendelfeder in Richtung zu der Verbindungsebene der beiden Gehäuseteile 3 und 4 gezogen wird. Die Enden der Zugfeder sind in Löcher 21 der Laschen 22 eingehängt, die angrenzend an die Flansche 8 aus dem Gehäusemantel nach innen in die Verbindungsebene abgebogen sind. Um die Montage des Rohrschott 1 infolge der Schließkraft des Vorhanges 17 nicht zu behindern, weist das Gehäuse eine Einrichtung zur Offenhaltung des Vorhanges auf. Hierzu sind Stifte 23 vorgesehen, die in Löcher 24 in der stirnseitigen Ringplatte 12 einsteckbar sind und die Vorhangteile 18 mit der zugehörigen Zugfeder 20 in Offenstellung hintergreifen. Nach der Montage des Rohrschotts 1 können diese Stifte 23 herausgezogen werden, so daß der Vorhang unter Vorspannung am Außenumfang des Rohres anliegt. Im Falle des Erweichens des Rohres im Brandfalle schließt der Vorhang vollständig, so daß die beiden Zugfedern 20 im wesentlichen nebeneinanderliegen, wie dies in der unteren Hälfte von Fig. 1 angedeutet ist. Der Vorhang verhindert das Eindringen von heißen Gasen und Flammen in das Rohrschott mindestens so lange, bis das Quellmittel innerhalb des Gehäuses so weit aufgequollen ist, daß der Rohrdurchgang völlig verschlossen ist.

Zur Montage des Rohrschotts werden die halbrohrförmigen Quellmittel-Formkörper in die Gehäuseteile 3 und 4 eingelegt, wonach diese Teile nach vorheriger Fixierung des Vorhangs 17 in Offenstellung um das abzuschottende Rohr im Bereich einer Wand oder der Unterseite einer Ecke zusammengefügt und miteinander verbunden werden. Das Rohrschott wird dann an die Wand bzw. die Decke geschoben, bis der Flansch 10 dort zur Anlage kommt, wonach es durch Befestigung des Flansches an der Wand bzw. der Decke befestigt wird.

Das erfindungsgemäße Rohrschott kann in einfacher Weise in verschiedenen, den jeweiligen Rohrdurchmessern angepaßten Größen vorliegen. Die Montage ist dadurch in einfacher Weise möglich.

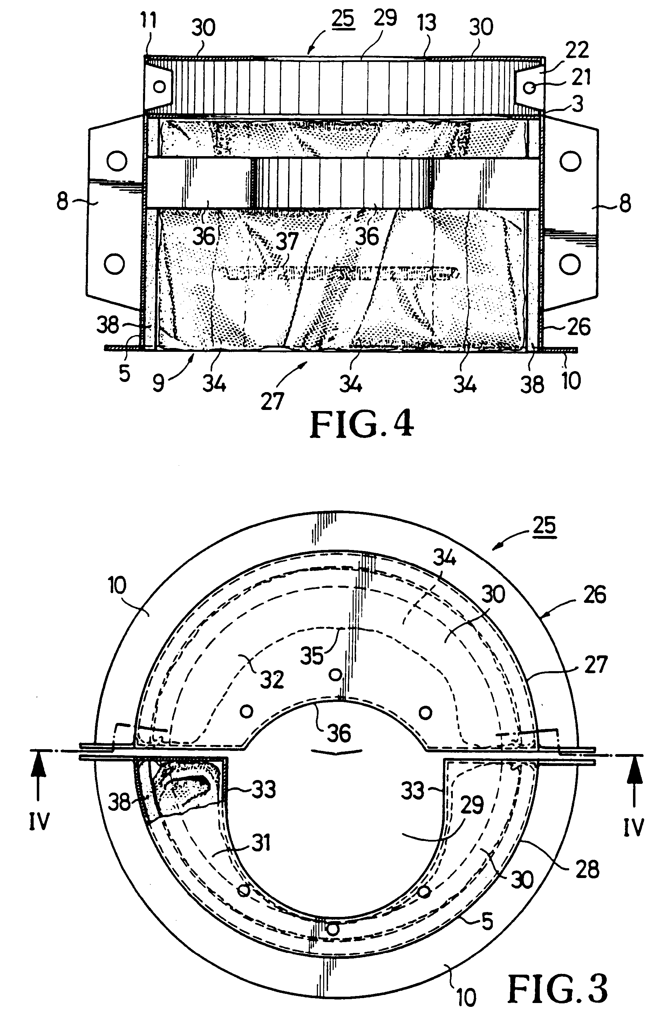

Bei der in den Fig. 3 und 4 dargestellten Ausführungsform ist ein Rohrschott 25 vorgesehen, das für die Wandmontage bestimmt ist. Gleiche Teile sind mit den gleichen Bezugsziffern wie bei der vorhergehenden Ausführungsform bezeichnet. Das Rohrschott ist asymmetrisch äusgebildet, um der normalerweise stärkeren Erhitzung des Rohres an seiner Oberseite Rechnung zu tragen. Das Rohrschott 25 weist wiederum ein Gehäuse 26 auf, das aus zwei Teilen 27 und 28 zusammengesetzt ist, die im wesentlichen den Teilen 3 und 4 der Fig. 1 und 2 entsprechen. Die Verbindungsebene der beiden Teile befindet sich in einer radialen Horizontalebene, bezogen auf die äußere Mantelfläche 5 des Gehäuses 26. Die Öffnung 29 in der Stirnplatte 30 an den von der Wand abweisenden Ende 11 ist jedoch exzentrisch nach unten versetzt, so daß die Verbindungsebene die Öffnung nicht mehr radial schneidet. Der überwiegende Teil der zur Aufnahme des Rohres dienenden stirnseitigen Öffnung befindet sich im unteren, im wesentlichen U-förmig ausgeschnittenen Teil 31 der stirnseitigen Ringplatte 31, wogegen im oberen Teil 32 nur noch ein Bogenmaß von ca. 120° ausgeschnitten ist. Im unteren Teil 31 verlaufen seitliche Schenkel 33 des U-förmigen Ausschnittes im wesentlichen parallel, um ein problemloses Aufschieben des unteren Gehäuseteils 28 auf das Rohr zu ermöglichen.

Da die stirnseitige Ringplatte 30 zur Justierung des Rohrschotts 25 auf dem Rohr dient, sitzt bei dieser Ausführungsform das gesamte Rohrschott asymmetrisch auf dem Rohr, wodurch auch der Ringraum zwischen dem Rohr und der Mantelfläche 5 asymmetrisch verläuft, d.h. in seiner radialen Weite von unten nach oben zunimmt, wobei er oben bis zu sechsmal so groß ist wie unten.

Bei der in den Fig. 3 und 4 dargestellten asymmetrischen, für die Wandmontage vorgesehenen Ausführungsform sind anstelle rinnenförmiger Formkörper aus Quellmittel Quellmittelgranulate vorgesehen, die in Beutel verpackt sind. Diese Beutel können in den unteren bzw. oberen Ringraum der Gehäuseteile 27 und 28 eingelegt werden. Dabei werden entsprechend der unterschiedlichen Größe der zur Verfügung stehenden Ringräume unterschiedlich große Beutel verwendet oder es werden an der oberen Seite mehrere Beutel über- und/oder nebeneinander eingelegt. Die Beutel können flexibel sein, indem sie nur teilweise mit dem Quellmittelgranulat befüllt sind. Es ist auch möglich, die Beutel zu stabilisieren, indem das Quellmittelgranulat in vorgeformter, der Ringform angepaßter Beutelgestalt vakuumverpackt wird. Die Beutel sind, wie dies in Fig. 3 schematisch dargestellt ist, durch Trennwände 35 in Einzelkammern unterteilt, wodurch im Brandfalle ein sukzessives Öffnen der einzelnen Beutel erreicht wird. Dadurch wird ein vorzeitiges vollständiges Entleeren des Beutelinhalts verhindert.

Der oder die Beutel 34 im Ringraum des oberen Gehäuseteils 27 sind asymmetrisch abgestützt, wodurch ein Kippmoment auf die Beutel ausgeübt wird, das ein schnelles Verschließen des Rohrquerschnitts im Brandfalle begünstigt. Hierzu weist das obere Gehäuseteil 27 einen Querbügel 36 auf, der im wesentlichen entlang der Verbindungsebene der beiden Teile 27 und 28 und entlang dem bogenförmigen Ausschnitt in dem oberen Teil der stirnseitigen Ringplatte 30 verläuft und damit der Oberseite des Rohres angepaßt ist. Dieser Querbügel 36 befindet sich in der Nähe des von der Wand abweisenden Endes 11 des Rohrschotts 25. Im Bereich der wandseitigen Stirnseite 9 ist der Beutel bzw. sind die Beutel im Ringraum des oberen Gehäuseteils 27 durch eine Zugfeder 37 von oben her belastet und gegen das abzuschottende Rohr gedrückt. Diese Zugfeder, die im Mantel 5 des oberen Gehäuseteils 27 verankert ist, befindet sich im Vergleich zum Querbügel 36 in Richtung zum wandseitigen Ende 9 des Rohrschotts 25 axial und radial versetzt. Wenn das Rohr im Brandfalle erweicht und nachgibt, wird der Beutel 34 im oberen Teil 27 am wandseitigen Bereich durch die Feder 37 in die Rohröffnung gedrückt, wogegen er im von der Wand abweisenden Bereich durch den Bügel 36 obengehalten wird und somit durch die Schrägstellung den Rohrquerschnitt verschließt.

Im übrigen weist diese Ausführungsform ebenfalls einen zusätzlichen Ringraum 16 mit einem darin vorgesehenen zweiteiligen Vorhang auf. Dieser Vorhang und seine Befestigungsmittel sind der Übersichtlichkeit halber jedoch nicht dargestellt.

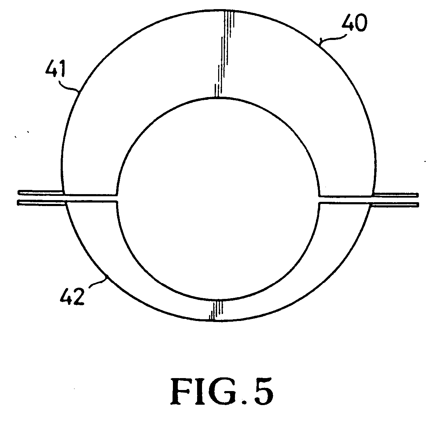

Die nur schematisch dargestellte Ausführungsform nach Fig. 5 zeigt wiederum eine asymmetrische bzw. exzentrische Ausführung eines Rohrschotts 40. Das Rohrschott ist ebenfalls zweiteilig aus einem oberen Gehäuseteil 41 und einem unteren Gehäuseteil 42 zusammengesetzt. Die Verbindungsebene läuft bei dieser Ausführungsform jedoch nicht durch die Längsachse des Gehäusemantels, sondern durch die Achse der zur Aufnahme des Rohres dienenden stirnseitigen Öffnung 43 an dem von der Wand abweisenden Ende des Rohrschotts 40. Diese Ausführungsform ermöglicht ebenfalls in einfacher Weise die Verwendung des Quellmittels in Form von vorgeformten Formkörpern. Die Innenfläche dieser Formkörper ist jeweils halbrohrförmig, so daß sie trotz der Exzentrizität das zu umgebende Rohr im wesentlichen dicht umschließen. Die Formkörper lassen sich trotz ihrer asymmetrischen Gestalt in einfacher Weise durch Pressen oder Extrudieren in axialer Richtung aus einer verfestigbaren Quellmittelmischung herstellen.

## Patentansprüche

1. Rohrschott (1; 25; 40) zum Schutz von Rohrdurchführungen durch Wände oder Decken im Brandfalle mit einem zum Umfassen eines im Bereich der Wand oder Decke liegenden Rohrabschnittes ausgebildeten Mantel (5), zwischen dem und dem Rohr ein wärmewirksames Quellmittel (7; 34) zum Ausfüllen des Rohrabschnittes vorgesehen ist, und einem formfesten Gehäuse (2; 26; 41, 42) aus nicht brennbarem Material, das zum Umgeben des Rohrabschnittes ausgebildet ist, wobei zwischen Gehäusemantel (5) und Rohr ein Ringraum (6) zur Aufnahme des Quellmitteln (7; 34) vorgesehen ist,
dadurch gekennzeichnet,
daß das Gehäuse (2) an mindestens einem Ende mindestens einen mehrteiligen schließbaren Vorhang (17) aufweist.

2. Rohrschott nach Anspruch 1,
dadurch gekennzeichnet,
daß der Vorhang (17) an dem von der Wand oder Decke abweisenden Ende (11) des Gehäuses (2) angebracht ist.

3. Rohrschott nach Anspruch 1 oder 2,
dadurch gekennzeichnet,
daß der Vorhang (17) zweiteilig ist.

4. Rohrschott nach einem der Ansprüche 1 bis 3,
dadurch gekennzeichnet,
daß der Vorhang (17) in einer zur Gehäuseachse im wesentlichen senkrechten Ebene bewegbar angeordnet ist.

5. Rohrschott nach einem der Ansprüche 1 bis 4,
dadurch gekennzeichnet,
daß das Gehäuse (2; 26; 41, 42) als an der Wand oder Decke befestigbare Aufputzdose ausgebildet ist.

6. Rohrschott nach einem der Ansprüche 1 bis 5,
dadurch gekennzeichnet,
daß das Gehäuse (2; 26; 41, 42) am wand- bzw. deckenseitigen Ende (9) des Gehäusemantels (5) einen radial abstehenden Ringflansch (10) aufweist, der an der Wand oder der Decke anlegbar und insbesondere durch Befestigungsmittel anpreßbar. ist.

7. Rohrschott nach einem der vorhergehenden Ansprüche,
dadurch gekennzeichnet,
daß das Gehäuse (2; 26; 41, 42) zur nachträglichen Montage um ein bereits verlegtes Rohr in Längsrichtung geteilt, insbesondere zweiteilig ausgebildet ist, wobei die Teile (3, 4; 27, 28) in einer eine radiale Aufweitung verhindernden Weise miteinander verbindbar sind.

8. Rohrschott nach einem der vorhergehenden Ansprüche,
dadurch gekennzeichnet,
daß das Verhältnis von axialer Länge des Gehäuses (2; 26) zum Außendurchmesser des Gehäusemantels (5) im Bereich von 1 : 1 bis 0,5 : 1 liegt, insbesondere kleiner 1 ist.

9. Rohrschott nach einem der vorhergehenden Ansprüche, dadurch gekennzeichnet, daß die axiale Länge des Gehäuses (2; 26) im Bereich der Größe des Rohraußendurchmessers liegt.

10. Rohrschott nach einem der vorhergehenden Ansprüche,
dadurch gekennzeichnet,
daß für eine Wandmontage im Ringraum (6) oberhalb des Rohres eine größere Quellmittelmenge vorgesehen ist als unterhalb des Rohres.

11. Rohrschott nach Anspruch 10,
dadurch gekennzeichnet,
daß das Gehäuse (26; 41, 42) derart asymmetrisch ausgebildet ist, daß der Ringraum (6) oberhalb des Rohres eine größere radiale Ausdehnung besitzt als unterhalb des Rohres.

12. Rohrschott nach einem der vorhergehenden Ansprüche,
dadurch gekennzeichnet,
daß es an dem von der Wand oder Decke abweisenden Ende (11) des Gehäuses, insbesondere in einer stirnseitigen Wand (12), eine Öffnung (14; 29) aufweist, die im wesentlichen der Querschnittsform und Größe des Rohres entspricht.

13. Rohrschott nach Anspruch 12,
dadurch gekennzeichnet,
daß das Gehäuse (2; 26; 41, 42) durch diese Öffnung (14; 29) in seiner Lage auf dem Rohr ausrichtbar ist.

14. Rohrschott nach Anspruch 12 oder 13,
dadurch gekennzeichnet,
daß die Öffnung (29) bei einem Gehäuse (26; 41, 42) für die Wandmontage asymmetrisch in der Stirnseite (30) des Gehäuses vorgesehen ist, wobei die Öffnung nach unten versetzt ist.

15. Rohrschott nach einem der vorhergehenden Ansprüche,
dadurch gekennzeichnet,
daß die Teile (18) des Vorhangs (17) unter Vorspannung an dem Außenumfang des Rohres zur Anlage bringbar sind und sich in Schließstellung vorzugsweise entlang einer Linie berühren.

16. Rohrschott nach Anspruch 15,
dadurch gekennzeichnet,
daß die Vorspannung durch Federn (20), insbesondere Wendel-Zugfedern, erzeugt wird, die in Schließstellung im wesentlichen parallel nebeneinander verlaufen, insbesondere längs der Verbindungsebene von zwei Gehäuseteilen (3 und 4).

17. Rohrschott nach einem der vorhergehenden Ansprüche,
dadurch gekennzeichnet,
daß die Vorhangteile (18) am Innenumfang des Gehäusemantels (5) bzw. der jeweiligen Gehäuseteile (3, 4) fixiert sind.

18. Rohrschott nach einem der vorhergehenden Ansprüche,
dadurch gekennzeichnet,
daß die Vorhangteile im Bereich des die Öffnung (14) aufweisenden Stirnseitenendes (11) des Gehäuses (2) fixiert sind.

19. Rohrschott nach einem der vorhergehenden Ansprüche,
gekennzeichnet dadurch,
daß die Vorhangteile (18) mittels eines Bügels (19), insbesondere Drahtbügels, am Innenumfang des Gehäusemantels (5) fixiert sind.

20. Rohrschott nach einem der Ansprüche 16 bis 19,
dadurch gekennzeichnet,
daß die Zugfedern (20) und/oder die Bügel (19) von den Vorhangteilen (18) umfaßt werden.

21. Rohrschott nach Anspruch 20,
dadurch gekennzeichnet,
daß die Vorhangteile (18) von flächig zusammengelegten Schlauchstücken gebildet sind, in die die Zugfedern (20) und/oder Bügel (19) eingelegt sind.

22. Rohrschott nach einem der Ansprüche 16 bis 21,
dadurch gekennzeichnet,
daß die die Vorspannung der Vorhangteile (18) erzeugenden Federn (20) zur Montagehilfe, vorzugsweise an der Innenseite der Stirnwand (12), entlang eines Bogens lösbar fixiert sind, der im wesentlichen konzentrisch zur stirnseitigen Öffnung (14) verläuft und dessen Durchmesser größer ist als der Außendurchmesser des Rohres.

23. Rohrschott nach Anspruch 22,
dadurch gekennzeichnet,
daß die lösbare Fixierung mit Hilfe von durch die Stirnwand (12) hindurchgesteckte, herausziehbare Stifte (23) erfolgt.

24. Rohrschott nach einem der vorhergehenden Ansprüche,
dadurch gekennzeichnet,
daß das Quellmittel (7; 34) in trockener Form mindestens eines geformten Körpers (7; 34) vorliegt, der der Außenform des Rohres angepaßt ist.

25. Rohrschott nach Anspruch 24,
dadurch gekennzeichnet,
daß das Quellmittel (7; 34) die Form eines im wesentlichen zylindrischen, formstabilen Rohr- oder Rinnenkörpers (7) aufweist, dessen Innenkrümmung gleich oder geringfügig größer ist wie die Außenkrümmung des Rohres.

26. Rohrschott nach Anspruch 25,
dadurch gekennzeichnet,
daß der Rohrkörper (7) in mindestens zwei rinnenförmig verlaufende Abschnitte unterteilt ist, die zu einem Rohrmantel zusammenfügbar sind.

27. Rohrschott nach einem der vorhergehenden Ansprüche,
dadurch gekennzeichnet,
daß das Quellmittel in Form eines rieselfähigen körnigen Granulats (34) vorliegt, das in mindestens einem unter Wärmeeinwirkung zerfallenden Beutel, insbesondere einem Kunststoffbeutel, enthalten ist.

28. Rohrschott nach Anspruch 27,
dadurch gekennzeichnet,
daß der Beutel (34) in mehrere Kammern unterteilt ist und/oder mehrere Beutelkammern in radialer Richtung aufeinanderfolgend vorgesehen sind.

29. Rohrschott nach Anspruch 27 oder 28,
dadurch gekennzeichnet,
daß die Kammern eines Beutels durch gemeinsame Trennwände voneinander getrennt sind.

30. Rohrschott nach einem der Ansprüche 27 bis 29,
dadurch gekennzeichnet,
daß das rieselfähige Quellmittel mindestens einen wärmewirksamen Kleber enthält, der die Rieselfähigkeit bei Wärmeeinwirkung beseitigt.

31. Rohrschott nach einem der Ansprüche 27 bis 30,
dadurch gekennzeichnet,
daß in dem Ringraum (6) mindestens zwei mit Quellmittel gefüllte Beutel (34) in Form von im wesentlichen kreisförmigen Bogen innerhalb des Gehäuses (26) um das Rohr herumlegbar sind.

32. Rohrschott nach einem der vorhergehenden Ansprüche,
dadurch gekennzeichnet,
daß im Gehäuse (26) Federmittel (37) vorgesehen sind, die mindestens an einer Rohroberseite vorgesehenes Quellmittel, insbesondere Quellmittelbeutel (34), gegen die Rohroberfläche drücken.

33. Rohrschott nach einem der vorhergehenden Ansprüche,
dadurch gekennzeichnet,
daß das Quellmittel enthaltende Formeinheiten (34) in Längsrichtung des Gehäuses (26) an der dem Rohr zugewandten Seite asymmetrisch abgestützt sind, wobei insbesondere Federmittel (37) und Abstützung (36) in Längsrichtung derart gegeneinander versetzt sind, daß ein Kippmoment auf die Formeinheit (34) ausgeübt wird.

34. Rohrschott nach Anspruch 33,
dadurch gekennzeichnet,
daß die Abstützung (36) im Bereich des von der Wand bzw. Decke abweisenden Endes (11) des Gehäuses (26) vorgesehen ist.

35. Rohrschott nach einem der vorhergehenden Ansprüche zur Wandmontage,
dadurch gekennzeichnet,
daß die Schichtdicke des Quellmittels (7; 34) oberhalb des Rohres größer ist als unterhalb.

36. Rohrschott nach einem der Ansprüche 25 bis 35,
dadurch gekennzeichnet,
daß die Wandstärke des zylindrischen Formkörpers (7) und/oder die Dikke des mindestens einen Beutels (34) einer durch eine Exzentrizität des Rohrdurchgangs durch das Gehäuse (26) bedingten Asymmetrie des Ringraumes (6) angepaßt ist.

37. Rohrschott nach einem der Ansprüche 27 bis 36,
dadurch gekennzeichnet,
daß das Quellmittel in den Beuteln (34) in einer zur Anlage an das Rohr geeigneten Formgebung vakuumverpackt und dadurch in Form stabilisiert ist.

38. Rohrschott nach einem der vorhergehenden Ansprüche, insbesondere zur Wandmontage,
dadurch gekennzeichnet,
daß die radiale Dicke der Quellmittelschicht (7; 34) oben mindestens doppelt so groß ist wie unten, insbesondere bis zu sechsfach so dick, wobei sie im wesentlichen stetig von unten nach oben zunimmt.

## Claims

1. A pipe seal (1;25;40) for protecting passages for pipes through walls or ceilings in the event of fire comprising a jacket (5) which is designed to fit around a pipe section situated in the region of the wall or ceiling and between which and the pipe is provided a heat-activated swelling agent (7;34) for filling the pipe section and a dimensionally stable housing (2;26;41;42) of non-inflammable material which is designed to fit around the pipe section, an annular space (6) for accommodating the swelling agent (7;34) being provided between the housing jacket (5) and the pipe, characterized in that, at at least one end, the housing (2) comprises at least one multiple-part closeable curtain (17).

2. A pipe seal as claimed in claim 1, characterized in that the curtain (17) is arranged at that end (11) of the housing (2) which faces away from the wall or ceiling.

3. A pipe seal as claimed in claim 1 or 2, characterized in that the curtain (17) is in two parts.

4. A pipe seal as claimed in any of claims 1 to 3, characterized in that the curtain (17) is arranged for movement in a plane substantially perpendicular to the housing axis.

5. A pipe seal as claimed in any of claims 1 to 4, characterized in that the housing (2;26;41;42) is in the form of a container designed for surface mounting on the wall or ceiling.

6. A pipe seal as claimed in any of claims 1 to 5, characterized in that, at the end (9) of the jacket (5) which faces the wall or ceiling, the housing (2;26;41,42) comprises a radially projecting annular flange (10) which is designed to be applied to and, in particular, pressed by fixing means onto the wall or ceiling.

7. A pipe seal as claimed in any of the preceding claims, characterized in that, for subsequent fitting around an already laid pipe, the housing (2;26;41,42) is longitudinally divided and, more particularly, made in two parts, the parts (3,4;27,28) preferably being designed for connection to one another in a manner which prevents radial widening.

8. A pipe seal as claimed in any of the preceding claims, characterized in that the ratio of the axial length of the housing (2;26) to the external diameter of the jacket (5) is from 1:1 to 0.5:1 and more particularly less than 1.

9. A pipe seal as claimed in any of the preceding claims, characterized in that the axial length of the housing (2;26) is substantially equal to the external diameter of the pipe.

10. A pipe seal as claimed in any of the preceding claims, characterized in that, for wall mounting, a larger quantity of swelling agent is provided in the annular space (6) above the pipe than below the pipe.

11. A pipe seal as claimed in claim 10, characterized in that the housing (26;41,42) is asymmetrical so that the annular space (6) above the pipe has a greater radial extent than below the pipe.

12. A pipe seal as claimed in any of the preceding claims, characterized in that, at that end (11) of the housing which faces away from the wall or ceiling, it comprises an opening (14;29), more particularly in an end wall (12), which substantially corresponds to the cross-sectional shape and size of the pipe.

13. A pipe seal as claimed in claim 12, characterized in that the opening (14;29) aligns the housing (2;26;41;42) in its position relative to the pipe.

14. A pipe seal as claimed in claim 12 or 13, characterized in that, where the housing (26;41,42) is designed for wall mounting, the opening (29) is provided asymmetrically in the end face (30) of the housing, the opening being offset in the downward direction.

15. A pipe seal as claimed in any of the preceding claims, characterized in that the parts (18) of the curtain (17) are designed for application under bias to the outer circumference of the pipe and, in the closed position, are in contact, preferably linear contact, with one another.

16. A pipe seal as claimed in claim 15, characterized in that the bias is generated by springs (20), more particularly helical tension springs, which extend substantially parallel to one another in the closed position, more particularly along the connecting plane between two housing parts (3 and 4).

17. A pipe seal as claimed in any of the preceding claims, characterized in that the curtain parts (18) are fixed to the inner circumference of the housing jacket (5) or the respective parts (3,4) of the housing.

18. A pipe seal as claimed in any of the preceding claims, characterized in that the curtain parts are fixed in the region of that end (11) of the housing (2) which comprises the opening (14).

19. A pipe seal as claimed in any of the preceding claims, characterized in that the curtain parts (18) are fixed to the inner circumference of the housing jacket (5) by means of a clip (19), more particularly a wire clip.

20. A pipe seal as claimed in any of claims 16 to 19, characterized in that the tension springs (20) and/or the clips (19) are surrounded by the curtain parts (18).

21. A pipe seal as claimed in claim 20, characterized in that the curtain parts (18) are formed by pieces of tubular fabric laid flat into which the tension springs (20) and/or clips (19) are introduced.

22. A pipe seal as claimed in any of claims 16 to 21, characterized in that, to facilitate mounting, the springs (20) generating the bias of the curtain parts (18) are releasably fixed, preferably on the inside of the end wall (12), along an arc which is substantially concentric to the opening (14) in the end face and of which the diameter is larger than the external diameter of the pipe.

23. A pipe seal as claimed in claim 22, characterized in that the springs are releasably fixed by means of removable pins (23) which are inserted through the end wall (12).

24. A pipe seal as claimed in any of the preceding claims, characterized in that the swelling agent (7;34) is present in dry form, namely in the form of at least one shaped element (7;34) which is adapted to the external shape of the pipe.

25. A pipe seal as claimed in claim 24, characterized in that the swelling agent (7;34) is in the form of a substantially cylindrical, dimensionally stable tube or channel (7) of which the internal diameter is equal to or slightly larger than the external diameter of the pipe.

26. A pipe seal as claimed in claim 25, characterized in that the tube-shaped element (7) is divided into at least two channel-shaped sections which are designed to fit together to form a pipe jacket.

27. A pipe seal as claimed in any of the preceding claims, characterized in that the swelling agent is in the form of free-flowing granules (34) which are packed in at least one bag, more particularly a plastic bag, which disintegrates under the effect of heat.

28. A pipe seal as claimed in claim 27, characterized in that the bag (34) is divided into several compartments and/or several bag compartments are provided following one another in the radial direction.

29. A pipe seal as claimed in claim 27 or 28, characterized in that the compartments of a bag are separated from one another by common partitions.

30. A pipe seal as claimed in any of claims 27 to 29, characterized in that the free-flowing swelling agent contains at least one heat-activated adhesive which stops the free flow under the effect of heat.

31. A pipe seal as claimed in any of claims 27 to 30, characterized in that, in the annular space (6), at least two bags (34) filled with swelling agent are designed to be placed around the pipe in the form of substantially circular arcs within the housing (26).

32. A pipe seal as claimed in any of the preceding claims, characterized in that spring means (37) are provided in the housing (26) and press swelling agent, more particularly bags (34) of swelling agent, provided at least on top of the pipe against the surface thereof.

33. A pipe seal as claimed in any of the preceding claims, characterized in that the shaped units (34) containing the swelling agent are asymmetrically supported longitudinally of the housing (26) on that side facing the pipe, the spring means (37) and support (36) being longitudinally offset from one another in such a way that a tilting moment is applied to the shaped unit (34).

34. A pipe seal as claimed in claim 33, characterized in that the support (36) is provided in the region of that end (11) of the housing (26) which faces away from the wall or ceiling.

35. A pipe seal as claimed in any of the preceding claims for wall mounting, characterized in that the layer thickness of the swelling agent (7;34) is greater above the pipe than below.

36. A pipe seal as claimed in any of claims 25 to 35, characterized in that the wall thickness of the cylindrical shaped element (7) and/or the thickness of the (at least one) bag (34) is adapted to an asymmetry of the annular space (6) caused by an eccentricity in the passage of the pipe through the housing (26).

37. A pipe seal as claimed in any of claims 27 to 36, characterized in that the swelling agent is vacuum-packed in the bags (34) in a shape suitable for application to the pipe and is thus dimensionally stabilized.

38. A pipe seal as claimed in any of the preceding claims, more particularly for wall mounting, characterized in that the radial thickness of the layer (7;34) of swelling agent is at least twice and, more particularly, up to six times as great at the top than at the bottom, increasing substantially constantly in the upward direction.

## Revendications

1. Traversée pour tuyaux (1 ; 25 ; 40) pour protéger les passages de tuyau dans les murs ou plafonds en cas d'incendie avec une enveloppe (5) formée pour entourer une partie de tuyau située dans le domaine de la paroi ou du plafond, on prévoit entre elle et le tuyau un agent gonflant réagissant à la chaleur (7 ; 34) pour obturer la section du tuyau, et un boîtier de forme rigide (2; 26 ; 41, 42) en matériau incombustible, qui est constitué pour entourer la partie de tuyau, en prévoyant entre l'enveloppe de boîtier (5) et le tuyau un espace annulaire (6) destiné à recevoir l'agent gonflant (7 ; 34), caractérisée en ce que le boîtier (2) comporte au moins à une extrémité au moins un rideau (17) pouvant être ferméé en plusieurs parties.

2. Traversée pour tuyaux selon la revendication 1 ou 2, caractérisée en ce que le rideau (17) est disposé à l'extrémité (11) opposée à la paroi ou au plafond du boîtier (2).

3. Traversée pour tuyaux selon la revendication 1 ou 2 caractérisée en ce que le rideau (17) est en deux parties.

4. Traversée pour tuyaux selon l'une des revendications 1 à 3, caractérisée en ce que le rideau (17) est disposé de façon mobile dans un plan essentiellement perpendiculaire.

5. Traversée pour tuyaux selon l'une des revendications 1 à 4, caractérisée en ce que le boîtier (2 ; 26 ; 41, 42) est constitué sous forme de boîte en saillie fixable à la paroi ou au plafond.

6. Traversée pour tuyaux selon l'une des revendications 1 à 5, caractérisée en ce que le boîtier (2, 26, 41, 42) présente à l'extrémité (9) de l'enveloppe (5) de boîtier du côté de la paroi ou du plafond une bride annulaire (10) se détachant radialement qu'on peut appliquer sur la paroi ou sur le plafond et notamment qu'on peut mettre en pression par des moyens de fixation.

7. Traversée pour tuyaux selon l'une des revendications précédentes, caractérisée en ce que le boîtier (2 ; 26 ; 41,42) est divisé dans le sens longitudinal pour le montage ultérieur sur un tuyau déjà posé, notamment en deux parties, les pièces (3, 4 ; 27, 28) sont reliables l'une à l'autre d'une façon empêchant une extension radiale.

8. Traversée pour tuyaux selon l'une des revendications précédentes, caractérisée en ce que la proportion de la longueur axiale du boîtier (2 ; 26) au diamètre extérieur de l'enveloppe de boîtier (5) est dans l'intervalle de 1:1 à 0,5:1, notamment est inférieure à 1.

9. Traversée pour tuyaux selon l'une des revendications précédentes, caractérisée en ce que la longueur axiale du boîtier (2 ; 26) est dans le domaine de la taille du diamètre extérieur du tuyau.

10. Traversée pour tuyaux selon l'une des revendications précédentes, caractérisé en ce que pour un montage sur une paroi on prévoit dans l'espace annulaire (6) au dessus du tuyau une plus grande quantité d'agent gonflant qu'en dessous du tuyau.

11. Traversée pour tuyaux selon la revendication 10, caractérisée en ce que le boîtier (26 ; 41, 42) est constitué asymétriquement de sorte que l'espace annulaire (6) au dessus du tuyau présente une extension radiale plus grande qu'en dessous du tuyau.

12. Traversée pour tuyaux selon l'une des revendications précédentes, caractérisée en ce qu'elle présente à l'extrémité (11) du boîtier opposée à la paroi ou au plafond, notamment dans une paroi frontale (12), un orifice (14 ; 29) qui correspond essentiellement à la forme de section et à la taille du tuyau.

13. Traversée pour tuyaux selon la revendication 12, caractérisée en ce que le boîtier (2 ; 26 ; 41, 42) peut être installé par cet orifice (14 ; 29) en position sur le tuyau.

14. Traversée pour tuyaux selon la revendication 12 ou 13, caractérisée en ce que l'orifice (29) dans un boîtier (26 ; 41, 42) pour montage sur une paroi est prévu asymétriquement dans la face frontale (30) du boîtier, l'orifice étant décalé vers le bas.

15. Traversée pour tuyaux selon l'une des revendications précédentes, caractérisée en ce que les pièces (18) du rideau (17) sont sous précontrainte à la périphérie externe du tuyau et en position de fermeture elles se touchent de préférence suivant une ligne.

16. Traversée pour tuyaux selon la revendication 15, caractérisée en ce que la précontrainte est obtenue par des ressorts (20) notamment des ressorts de traction hélicoïdaux, qui en position de fermeture s'étendent essentiellement parallèles côte à côte, notamment le long du plan de liaison de deux pièces de boîtier (3 et 4).

17. Traversée pour tuyaux selon l'une des revendications précédentes, caractérisée en ce que les pièces de rideau (18) sont fixées à la périphérie intérieure de l'enveloppe de boîtier (5) ou de chaque pièce de boîtier (3, 4).

18. Traversée pour tuyaux selon l'une des revendications précédentes, caractérisée en ce que les pièces rideau sont fixées dans le domaine de l'extrémité latérale frontale (11) du boîtier (2) présentant l'orifice (14).

19. Traversée pour tuyaux selon l'une des revendications précédentes, caractérisée en ce que les pièces de rideau (18) sont fixées à la périphérie intérieure de l'enveloppe de boîtier (5) au moyen d'un étrier (19), notamment un étrier en fil d'acier.

20. Traversée pour tuyaux selon l'une des revendications 16 à 19, caractérisée en ce que les ressorts de traction (20) et/ou les étriers (19) sont entourés par les pièces de rideau (18).

21. Traversée pour tuyaux selon la revendication 20, caractérisée en ce que les pièces de rideau (18) sont formées de morceaux de tube dans lesquels sont insérés les ressorts de traction (20) et/ou les étriers (19).

22. Traversée pour tuyaux selon d'une des revendications 16 à 21, caractérisée en ce que les ressorts (20) réalisant la précontrainte des pièces de rideau (18) pour l'aide au montage, sont fixés de manière amovible, de préférence à la face interne de la paroi frontale (12) le long d'un arc qui s'étend essentiellement de façon concentrique à l'orifice frontal (14) et dont le diamètre est plus grand que le diamètre externe du tuyau.

23. Traversée pour tuyaux selon la revendication 22, caractérisée en ce que la fixation démontable se fait à l'aide de tiges (23) extractibles enfoncées à travers la paroi frontale (12).

24. Traversée pour tuyaux selon l'une des revendications précédentes, caractérisée en ce que l'agent gonflant (7 ; 34) se trouve sous forme sèche d'au moins un corps moulé (7 ; 34), qui est adapté à la forme externe du tuyau.

25. Traversée pour tuyaux selon la revendication 24, caractérisée en ce que l'agent gonflant (7 ; 34) présente la forme d'un corps (7) en gouttière ou tubulaire essentiellement cylindrique et stable, dont la courbure interne est identique ou légèrement plus grande que la courbure externe du tuyau.

26. Traversée pour tuyaux selon la revendication 25, caractérisée en ce que le corps tubulaire (7) est divisé en au moins deux parties en forme de gouttière, qui sont assemblables en une enveloppe tubulaire.

27. Traversée pour tuyaux selon l'une des revendications précédentes, caractérisée en ce que l'agent gonflant se présente sous la forme d'un granulé (34) en grains pouvant couler, qui est contenu dans un sac se décomposant sous l'effet de la chaleur, notamment un sac en plastique.

28. Traversée pour tuyaux selon la revendication 27, caractérisée en ce que le sac (34) est divisé en plusieurs chambres et/ou plusieurs chambres de sac se succédant dans le sens radial.

29. Traversée pour tuyaux selon les revendications 27 ou 28, caractérisée en ce que les chambres d'un sac sont séparées l'une de l'autre par des parois de séparation communes.

30. Traversée pour tuyaux selon l'une des revendications 27 à 29, caractérisée en ce que l'agent gonflant pouvant couler contient au moins un adhésif rendu efficace par la chaleur qui élimine la coulabilité sous l'effet de la chaleur.

31. Traversée pour tuyaux selon l'une des revendications 27 à 30, caractérisée en ce que dans l'espace annulaire (6) se trouve enroulés autour du tuyau au moins deux sacs (34) remplis d'agent gonflant en forme d'arc essentiellement circulaires à l'intérieur du boîtier (26).

32. Traversée pour tuyaux selon l'une des revendications précédentes, caractérisée en ce qu'on prévoit dans le boîtier (26) des ressorts (37) qui appliquent contre la surface du tuyau de l'agent gonflant prévu au moins sur une surface supérieure de tuyau, notamment des sacs (34) d'agent gonflant.

33. Traversée pour tuyaux selon l'une des revendications précédentes, caractérisée en ce que les unités formées (34) contenant l'agent gonflant s'appliquent dans le sens longitudinal du boîtier (26) de façon asymétrique sur la face tournée vers le tuyau, et notamment des ressorts (37) et l'appui (36) sont décalés l'un par rapport à l'autre dans le sens de la longueur, de sorte qu'un moment de renversement s'exerce sur l'unité formée (34).

34. Traversée pour tuyaux selon la revendication 33, caractérisée en ce que l'appui (36) est prévu dans le domaine de l'extrémité (11) du boîtier (26) opposée à la paroi ou au plafond.

35. Traversée pour tuyaux selon l'une des revendications précédentes pour le montage sur un mur, caractérisée en ce que l'épaisseur de couche de l'agent gonflant (7 ; 34) au dessus du tuyau est plus grande qu'en dessous.

36. Traversée pour tuyaux selon l'une des revendications 25 à 35, caractérisée en ce que l'épaisseur du corps moulé cylindrique (7) et/ou l'épaisseur d'au moins un sac (34) est adaptée à l'asymétrie de l'espace annulaire (6) causée par une excentricité du passage de tuyau dans le boîtier (26).

37. Traversée pour tuyaux selon l'une des revendications 27 à 36, caractérisée en ce que l'agent gonflant dans les poches (34) est emballé sous vide dans une forme adaptée à l'application sur le tuyau et ainsi est stabilisé en forme.

38. Traversée pour tuyaux selon l'une des revendications précédentes, notamment pour le montage sur un mur, caractérisée en ce que l'épaisseur radiale de la couche supérieure d'agent gonflant (7 ; 34) est au moins le double de l'épaisseur de la couche inférieure, notamment jusqu'à six fois aussi épaisse, et elle augmente essentiellement constamment du bas vers le haut.
